# EUROPEAN PATENT APPLICATION

(11) **EP 4 607 932 A1**
(43) Date of publication of application: **27.08.2025**
(21) Application number: 23880212.8
(22) Date of filing: 18.10.2023
(51) Int. Cl.: H04N 21/2381, H04N 21/61, H04N 21/643, H04N 21/6405, H04N 21/2362

(54) **MULTICAST SIGNAL TRANSMISSION METHOD, MULTICAST SIGNAL TRANSMISSION DEVICE, MULTICAST SIGNAL RECEPTION METHOD, AND MULTICAST SIGNAL RECEPTION METHOD**

(30) Priority: 18.10.2022 KR 20220134287; 20.10.2022 KR 20220135672
(71) Applicant: LG Electronics Inc., Yeongdeungpo-gu Seoul 07336 (KR)
(72) Inventor: KWON, Woosuk, Seoul 06772 (KR); YOON, Joonhee, Seoul 06772 (KR)
(74) Representative: Plasseraud IP
(86) International application number: PCT/KR2023/016113
(87) International publication number: WO 2024/085635

(57) **Abstract**

A multicast signal transmission method according to embodiments may comprise the steps of: receiving internet protocol (IP) streams for multicast from an upper layer; encapsulating the IP streams into generic stream encapsulation (GSE) packets in a link layer; generating a logical link control (LLC) descriptor of GSE and encapsulating the LLC descriptor into GSE-LLC packets in the link layer; and transmitting a GSE stream including the GSE packets and the GSE-LLC packets to a physical layer.

## Description

### [Technical Field]

Embodiments relate to a multicast signal transmission method, a multicast signal transmission device, a multicast signal reception method, and a multicast signal reception device.

### [Background Art]

With the development of digital technology and communication technology, distribution and demand for audio/video-oriented multimedia content are rapidly expanding in various fields, including broadcasting, film, the Internet, and personal media. In addition, as display technology advances and TV screens in households become larger, discussions on UHD (Ultra High Definition) broadcasting services are increasing.

Regarding broadcasting services, a multicast transmission method for transmitting the same content to multiple users is effective because it may take advantage of both unicast and broadcast. However, the conventional multicast transmission method is available only within a single network, and cannot support a multicast service across heterogeneous networks. As a result, when a multicast reception device establishes and releases connection to different access networks, the existing multicast service must be terminated before a new multicast service can start. Furthermore, when multiple transmission protocols are used, a protocol that configures the payload on IP/UDP or IP/TCP cannot be identified with a port number if it is not registered with IANA. In the case of IP multicast, the destination address and port number use values allocated for multicast, allowing all receivers to receive the corresponding packet. However, if an unknown protocol is used, multicast of the packet may not be processed.

### [Disclosure]

### [Technical Problem]

An object of the present disclosure is to provide a multicast signal transmission method and apparatus which are capable of improving transmission efficiency.

Embodiments provide a multicast signal transmission method, a multicast signal transmission device, a multicast signal reception method, and a multicast signal reception device for transmitting and receiving multiple multicast streams over a broadcast network.

Embodiments provide a multicast signal transmission method, a multicast signal transmission device, a multicast signal reception method, and a multicast signal reception device for transmitting and receiving MABR streams for IP-based multicast transmission.

The scope of the embodiments is not limited to the aforementioned objects, and may also cover other objects that can be inferred by those skilled in the art based on the entire content disclosed herein.

### [Technical Solution]

A method of transmitting a multicast signal according to embodiments may include receiving Internet Protocol (IP) streams for multicast from an upper layer, encapsulating the IP streams into a Generic Stream Encapsulation (GSE) packet at a link layer, generating a Logical Link Control (LLC) descriptor of GSE and encapsulating the same into a GSE-LLC packet at the link layer, and transmitting a GSE stream containing the GSE packet and the GSE-LLC packet to a physical layer.

### [Advantageous Effects]

Methods/devices according to embodiments may support multiple multicast streams over a broadcast network in TM-NIP.

Methods/devices according to embodiments may be compatible with the MABR standard for IP-based multicast transmission.

Methods/devices according to embodiments may apply MABR streams, for which ISP network-based transmission is considered, to a broadcast network.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
FIG. 1 illustrates Network Control Data (NCD) and Link Control Data (LCD) according to embodiments of the present disclosure.
FIG. 2 illustrates NCD and LCD according to embodiments of the present disclosure.
FIG. 3 illustrates a Native IP (NIP) stream according to embodiments of the present disclosure.
FIG. 4 illustrates an identifier (PHY_stream_id) for a generic stream (GS) in a modulation system according to embodiments of the present disclosure.
FIG. 5 illustrates an NIP stream according to embodiments of the present disclosure.
FIG. 6 illustrates a Generic Stream Encapsulation (GSE) layer for DVB-NIP according to embodiments of the present disclosure.
FIG. 7 illustrates a Network Information File (NIF) according to embodiments of the present disclosure.
FIG. 8 illustrates an NIF according to embodiments of the present disclosure.
FIG. 9 illustrates an NIF according to embodiments of the present disclosure.
FIG. 10 illustrates an NIF according to embodiments of the present disclosure.
FIG. 11 illustrates Generic Stream Encapsulation - Logical Link Control (GSE-LLC) signaling in an NIP system according to embodiments of the present disclosure.
FIG. 12 illustrates LCD according to embodiments of the present disclosure.
FIG. 13 illustrates a method of identifying an NIP stream according to embodiments of the present disclosure.
FIG. 14 illustrates a multicast signal transmission method according to embodiments of the present disclosure.
FIG. 15 illustrates a multicast signal reception method according to embodiments of the present disclosure.

### [Best Mode]

Reference will now be made in detail to the preferred embodiments of the present disclosure, examples of which are illustrated in the accompanying drawings. The detailed description, which will be given below with reference to the accompanying drawings, is intended to explain preferred embodiments of the present disclosure, rather than to show the only embodiments that can be implemented according to the present disclosure. The following detailed description includes specific details to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

A multicast signal processing method/device according to embodiments may refer to a multicast signal transmission method/device, a multicast signal reception method/device. They may be abbreviated as methods/devices according to embodiments. Multicast signals may be referred to as multicast data, multicast media data, multicast service data, media data, service data, or the like.

The methods/devices according to the embodiments may generate, transmit, and receive a native IP (NIP) stream. The definition of the NIP stream is given below.

A NIP stream may be defined as a GSE-Lite stream or an MPE stream.

In satellite broadcast networks such as DVB-S2X, one or more GSE streams or GSE-lite streams may be transmitted over a single physical transponder or channel.

In terrestrial broadcast networks such as DVB-T2, one or more GSE-lite streams may be transmitted through a single PLP.

In terrestrial broadcast networks that do not support GSE-lite, such as DVB-S2, NIP streams are carried using MPE streams and may contain a single DVB service.

Multiple MPE streams may be transmitted over the MPEG-2 TS. An MPE stream corresponding to each DVB service may be transmitted.

For the multicast signaling method/device according to embodiments, a multicast server may generate multicast data transmitted through a broadcast channel.

NIP signaling for transmitting the multicast data over the broadcast network may further be transmitted. The NIP signaling may be generated by a NIP signaling server associated with each NIP stream.

The NIP signaling server should have only a single multicast server connected for every NIP stream.

The multicast server may configure a multicast transport session that includes multiple multicast streams.

When multiple multicast server functions are supported on the physical channel, multiple PLP/ISI mechanisms may be applied.

In a satellite broadcast network, such as DVB-S2X, each multicast server function may be identified by an Input Stream Identifier (ISI).

In a terrestrial broadcast network, such as DVB-T2, each multicast server function may be identified by a PLP.

There is a need for methods of identifying NIP streams according to embodiments (NIP Stream Identifiers).

NIPNetworkID identifies a network.

NIPCarrierID uniquely identifies an RF carrier in the network identified by NIPNetworkID.

NIPLinkID identifies the NIP stream in the context of DVB-GSE (ETSI TS 102 606-2). Alternatively, it identifies the NIP stream in the context of DVB-S2 Professional Service (ETSI EN 302 307-1).

NIPServiceID identifies the NIP stream in the context of DVB-MPE (ETSI EN 301 192).

Depending on the data link layer (GSE, GSE-lite, MPE over TS), NIP streams may be identified using different identification methods.

When GSE or GSE-lite is used at the data link layer, NIP streams may be uniquely identified by a combination of the following four parameters.

NIPNetworkID: A unique identifier of the broadcast platform operator. This value may be assigned by DVB. This value corresponds to interactive_network_id defined in GSE-LLC (ETSI TS 102 606-2).

NIPCarrierID: May use modulation_system_id defined in GSE-LLC (ETSI TS 102 606-2) or may have an equivalent value. Depending on the network for transmission (e.g. T2, S2, S2X, etc.), it may have the same value as T2_system_id, S2_system_id, or S2X_system_id.

NIPLinkID: May have the value of link_id defined in GSE-LLC (ETSI TS 102 606-2) or have an equivalent value.

NIPServiceID: May be unused or set to an arbitrary value.

For links in the GSE, as in the case of a single input stream or unique PLP, NIPLinkID = 0.

When MPE over TS is used as the data link layer, NIP streams may be uniquely identified by a combination of the following parameters
NIPNetworkID: A unique identifier of the broadcast platform operator. This value may be assigned by DVB. It corresponds to original_network_id in DVB-SI (ETSI EN 300 468).

NIPCarrierID: A unique identifier of the TS in the original network. It corresponds to transport_stream_id in DVB-SI (ETSI EN 300 468).

NIPLinkID: May have the value of PHY_stream_ID defined in DVB Data Broadcasting (ETSI EN 301 192) or an equivalent value.

NIPServiceID: A unique identifier of a service in a DVB transport stream. It corresponds to service_id in DVB-SI (ETSI EN 300 468).

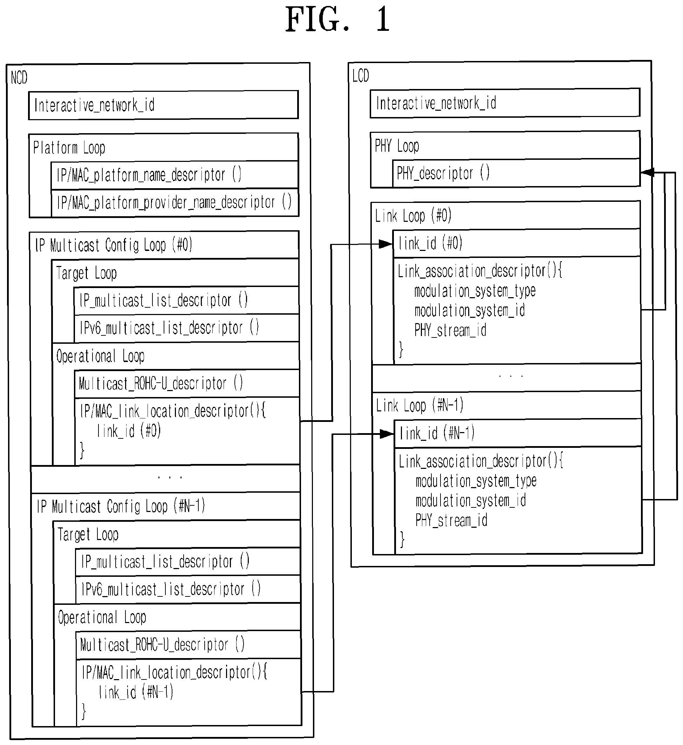

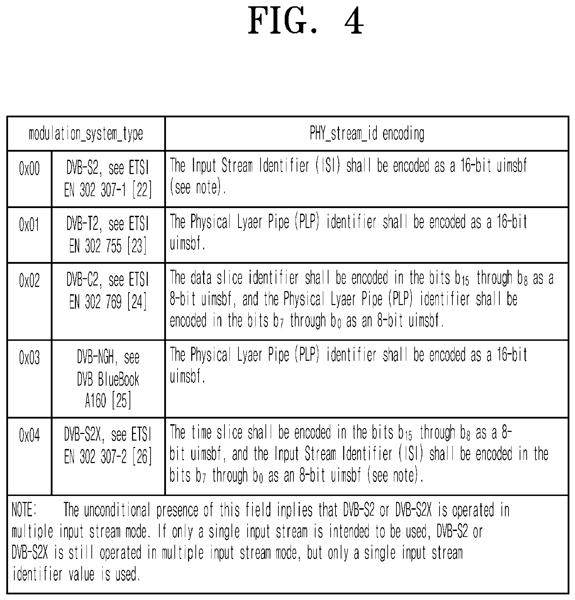

Thus, depending on how the NIPLinkID is defined, a multicast NIP stream may be identified and decoded by the receiver. NIP link identification according to embodiments includes the following two methods
Method 1: Defining NIPLinkID using Link_ID (see FIGS. 1 to 3)
Method 2: Defining NIPLinkID using PHY_stream_id (see FIGS. 4 to 5)

Hereinafter, Method 1 and Method 2 are described with reference to the respective drawings.

FIG. 1 illustrates Network Control Data (NCD) and Link Control Data (LCD) according to embodiments of the present disclosure.

When the data link layer is GSE or GSE-lite, the signaling method defined in GSE-LLC may be applied to the NIP stream. NIP streams may be defined without directly mapping physical layer parameters to physical layers S2/S2X, T2, etc.

FIG. 1 illustrates Network Control Data (NCD) and Link Control Data (LCD). The NCD and LCD correspond to GSE-LLC signaling information when the data link layer (hereafter, link layer) encapsulates a multicast IP stream in GSE or GSE-lite format.

The NCD may contain multiple logical IP multicast configuration loops. Each IP multicast configuration loop contains a target loop and an operational loop. Multiple descriptors may be configured in the target loop or the operational loop. An IP multicast configuration loop may be configured for each GSE stream. Each GSE stream may be identified by link_id in the IP/MAC_link_location_descriptor.

In the target descriptor loop of the NCD, IP_multicast_list_descriptor may be configured. In the case where IPv4 multicast and IPv6 multicast streams are carried together in the same GSE stream, both IP_multicast_list_descriptor and IPv6_multicast_list_descriptor may be included in the target descriptor loop of the NCD.

The operational descriptor loop of the NCD may contain ROHC-U_multicast_descriptor and IP/MAC_link_location_descriptor. In this case, one Multicast_ROHC-U_descriptor is configrued for the link_id because one ROHC channel may be configured for the GSE stream. If header compression is not used for the GSE stream, the Multicast_ROHC-U _descriptor is not included in the descriptor loop.

Each link_id is mapped to PHY_stream_id of each physical layer as configured in the LCD.

Information may be linked through link_id between the NCD and LCD.

The IP/MAC_link_location_descriptor contained in the NCD allows the link_id to be mapped to an IP multicast list. To indicate multicast for a physical layer, the connection to the physical layer is known. For example, the physical layer for a first multicast may be T2, and the physical layer for a second multicast may be S2.

An IP multicast list may define multiple IP streams.

The LCD may be used to define physical layer streams that map to corresponding link_ids.

A unique PHY_stream_id may be defined for each link_id.

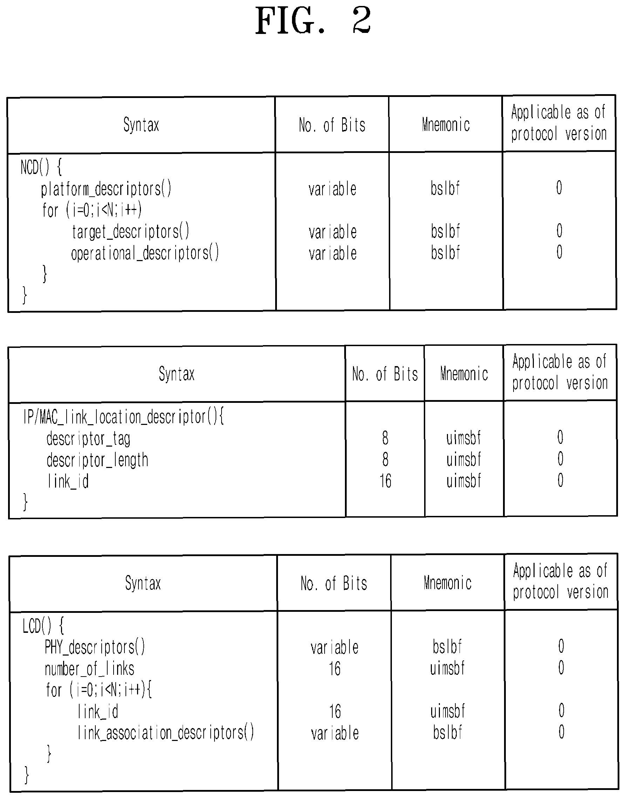

FIG. 2 illustrates Network Control Data (NCD) and Link Control Data (LCD) according to embodiments.

FIG. 2 shows a specific syntax of the NCD and LCD in FIG. 1.

The NCD contains the following information
target_descriptors, which distinguishes individual devices. It is encoded in a descriptor loop according to the following. This descriptor loop may contain descriptors such as target IP/MAC address, smart card, or person.

Operating_descriptors contains task, information, and operational descriptors that apply only to the corresponding task.

The IP/MAC_link_location_descriptor associates an operational IP/MAC stream parameter set of the NCD with a link within the same interactive network.

This descriptor is transmitted at least once in each instance of the operational descriptor loop of the NCD.

When it occurs twice or more in the loop, each value of link_id is unique within the corresponding instance of the descriptor loop.

link_id: This 16-bit field uniquely identifies the physical link within the Interactive_network_id.

The LCD contains the following information.

The LCD provides information about the physical layer used to transport the link data stream. The LCD may be delivered to the table_content_byte field of gse_table_structure().

PHY_descriptors: This variable-sized field describes the broadcast modulation system related to the Interactive_network_id.

number_of_links: This 16-bit field indicates the number of consecutive link records.

link_id: This 16-bit field uniquely identifies a physical link within the Interactive_network_id.

link_association_descriptors: This variable-sized field carries the link association descriptors.

Referring to FIGS. 1 and 2, in the multicast signal transmission method according to the embodiments, the LLC descriptor of the GSE may include Network Control Data (NCD) and Link Control Data (LCD). The NCD may include a first descriptor for a first IP stream for the multicast and a second descriptor for a second IP stream for the multicast. The first descriptor may include a first link ID for the first IP stream for the multicast, and the second descriptor may include a second link ID for the second IP stream for the multicast. The LCD may include a third link ID having the same value as the first link ID, a type of a modulation system for the first IP stream for the multicast, an identifier for identifying modulation parameters for the modulation system, and an identifier for a generic stream (GS) in the modulation system identified by the identifier. The LCD may further include a fourth link ID having the same value as the second link ID, a type of a modulation system for the second IP stream for the multicast, an identifier for identifying modulation parameters for the modulation system, and an identifier for a GS in the modulation system identified by the identifier.

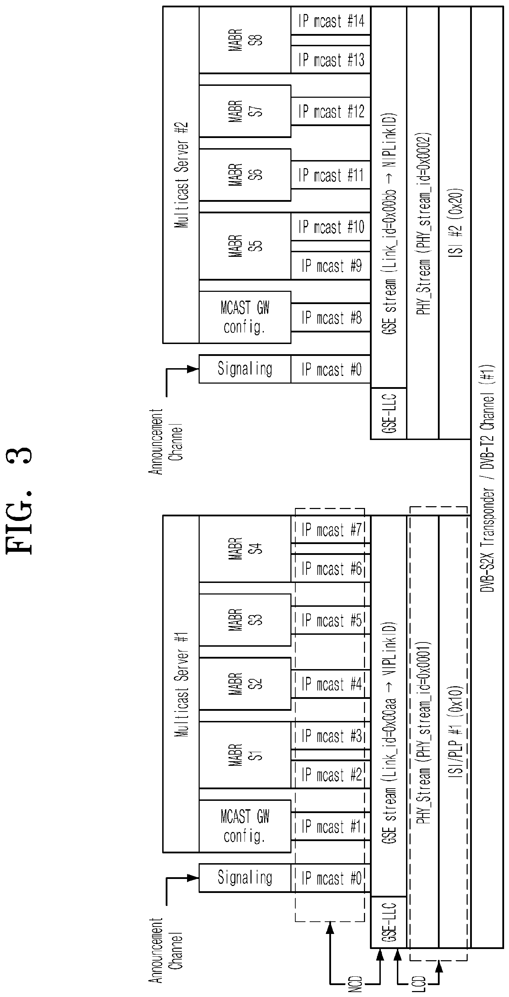

FIG. 3 illustrates a Native IP (NIP) stream according to embodiments of the present disclosure.

FIG. 3 illustrates a protocol stack structure for transmitting and receiving multicast NIP streams, including GSE-type data link layers such as NCD and LCD.

A broadcast signal transmitted over a specific DVB-S2X transponder or DVB-T2 channel is assigned interactive_network_id and modulation_system_id (or T2_system_id, S2_system_id, S2X_system_id). Accordingly, the NIPNetworkID and NIPCarrierID may be defined as interactive_network_id and modulation_system_id, respectively.

When the data link layer is GSE or GSE-lite, the NIPLinkID may be used to identify NIP streams on the network and carrier.

Multiple multicast streams, i.e., an IP multicast list, may be mapped to a specific link (NIP stream) through the NCD of the GSE-LLC.

The PHY_stream and related parameters contained in a specific link (NIP stream) may be defined through the LCD of the GSE-LLC.

Here, the NIP stream may be defined as corresponding to the GSE stream being transmitted or received and the GSE-LLC stream related thereto. Accordingly, NIPLinkID may be defined as link_id that may identify the GSE stream (Example 1).

Alternatively, a NIP stream may be defined as corresponding to a PHY stream being transmitted or received. Accordingly, NIPLinkID may be defined as PHY_stream_ID that may identify a PHY stream (Example 2).

As shown in FIG. 3, when multiple multicasts from multiple multicast servers are processed at the link layer and transmitted to the physical layer, link_id is mapped to an IP multicast list based on the NCD to identify the multicasts. IP multicasts and GSE streams may be mapped based on the link_id. For example, IP multicasts 0 to 7 transmitted from multicast server 1 are transmitted to the physical layer via a GSE-type link layer, where the link_id is set to NIPLinkID. When the NCD at the link layer provides the NIP stream mapping relationship between the upper layer and the link layer, the LCD at the link layer similarly provides the NIP stream mapping relationship between the link layer and the physical layer. For example, the link_id is mapped to PHY_stream_id.

FIG. 4 illustrates an identifier (PHY_stream_id) for a generic stream (GS) in a modulation system according to embodiments of the present disclosure.

The PHY_stream_id is an identifier for a GS in the modulation system.

When the data link layer is Multi-Protocol Encapsulation (MPE) or does not use GSE-LLC signaling (NCD, LCD), i.e., when the IP multicast stream is transmitted using MPE, or when it is transmitted using GSE/GSE-lite but does not use GSE-LLC signaling, the link_id may not be mapped to the NIPLinkID. In this case, the value of PHY_stream_id may be mapped to the NIPLinkID.
Embodiment 1: Defining NIPLinkID as NIPLinkID = PHY_stream_id
Embodiment 2: One-to-one mapping of NIPLinkID to PHY_stream_id.In other words, only one NIPLinkID is mapped to each PHY_stream_id.

PHY_stream_id may be encoded using IPI, PLP, time slice number, etc. depending on the modulation system, as described in FIG. 4.

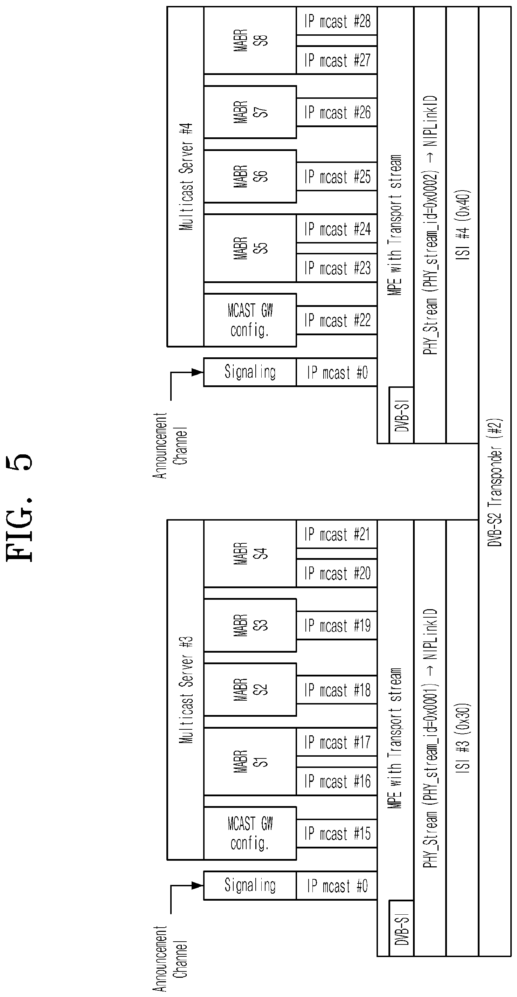

FIG. 5 illustrates an NIP stream according to embodiments of the present disclosure.

Compared to FIG. 3, FIG. 5 illustrates a protocol stack structure for transmitting and receiving NIP streams when the format of the data link layer is Multi-Protocol Encapsulation (MPE).

A broadcast signal transmitted through a specific DVB-S2 transponder or DVB-T2 channel is assigned original_network_id and transport_stream _id. Accordingly, NIPNetworkID and NIPCarrierID may be defined as original_network_id and transport_stream_id, respectively.

For transport streams that use MPE at the data link layer, the NIPLinkID may be used to identify the NIP stream on the corresponding network and carrier.

A NIP stream may be defined as corresponding to a PHY stream being transmitted or received. Accordingly, NIPLinkID may be defined as PHY_stream_ID that may identify a PHY stream.

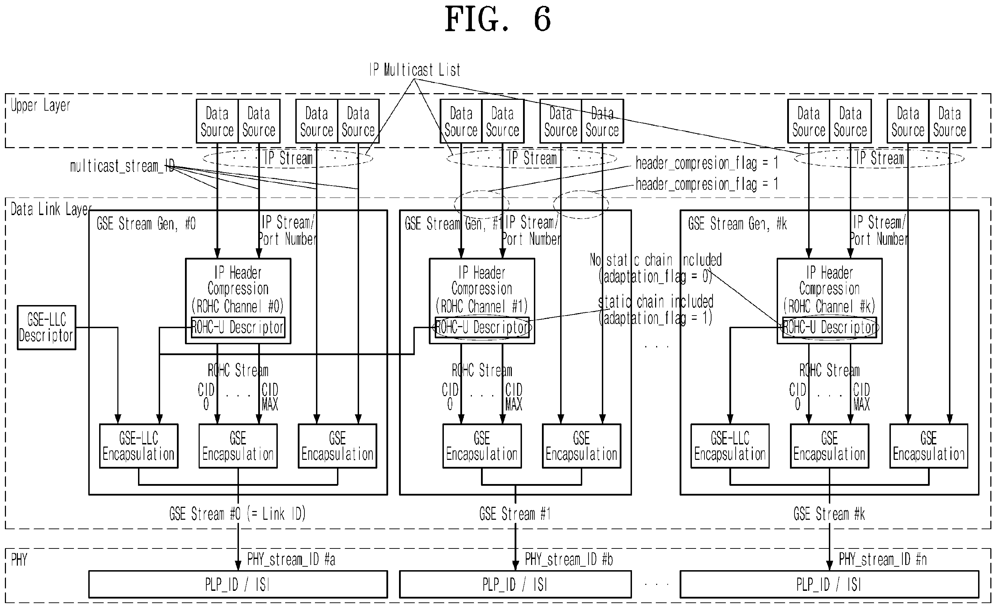

FIG. 6 illustrates a Generic Stream Encapsulation (GSE) layer for DVB-NIP according to embodiments of the present disclosure.

Link layer signaling operates below the IP layer. The receiver may obtain link layer signaling before IP-level signaling, such as announcement channel signaling. FIG. 6 shows the transport-side data link hierarchy and related identifiers for a DVB-NIP broadcast system.

NIP multicast IP streams are generated by both the multicast server and the NIP signaling server. They are shown as data sources in FIG. 6 and are each identified by a multicast stream ID. IP multicast streams may or may not be compressed. Compressed (header_compression_flag=1) IP multicast streams are passed through the IP ROHC compression module related to the corresponding GSE stream, also referred to as the GSE stream generator in FIG. 6. All IP multicast streams destined for a specific ISI or PLP are encapsulated in the corresponding GSE stream. In DVB-NIP, NIPLinkID and NIPCarrierID are related to each other. Link_id (defined in GSE-LLC, EN 102 606-2) is the same as NIPLinkID.

The NIPLinkID is mapped to the PHY stream ID (defined in 8.4.5.15 of ETSI EN 301 192) at the link layer. These two identifiers are mapped to the PLP ID for DVB-T2 (ETSI TS 102 755) and the ISI for DVB-S2 (ETSI EN 302 307-1) or DVB-S2X (ETSI EN 302 307-1, ETSI EN 302 307-2) of the corresponding NIP stream.

The link layer signaling is encapsulated in a GSE-LLC packet as described in GSE-LLC (EN 102 606-2). The GSE-LLC packet may contain multiple descriptors.

To support the GSE hierarchy and multicast delivery, the following descriptors may be used for link layer signaling in the NIP system
IP Multicast List Descriptor: This descriptor carries the IPv4 multicast list carried on the physical link. This descriptor also provides additional information for processing UDP/IPv4 packets carrying multicast at the DVB-GSE layer. This descriptor provides information only about UDP/IPv4 multicast.

IPv6 Multicast List Descriptor: This descriptor carries the IPv6 multicast list carried on the physical link. This descriptor also provides additional information for processing UDP/IPv6 packets carrying multicast at the DVB-GSE layer. This descriptor provides information only about UDP/IPv6 multicast.

ROHC-U Multicast Descriptor: This descriptor carries configuration parameters for the ROHC channel using ROHC for IP as defined in ETSI TS 102 606-3.

ROHC-U Descriptor: This descriptor carries configuration parameters for a single CID of ROHC as defined in ETSI TS 102 606-3.

In the NIP system according to the embodiments, when the data link layer is GSE-lite, the NIPLinkID shall be redefined using link_id defined in GSE-LLC. NIP signaling is defined using GSE-related parameters instead of PHY-related parameters.

When the data link layer is GSE-lite in the NIP system, the GSE stream identifier may be used to identify NIP streams. In the GSE-LLC standard, link_id is a mandatory parameter used to identify a GSE stream. This parameter may be used as NIPLinkID. Using PHY-related parameters may cause field length mismatches in some signaling parameters. The direct use of PHY- parameters raises implementation issues that result in field length mismatches in some NIP signaling parameters. The methods/devices according to embodiments effectively address these technical issues by redefining the NIPLinkID.

The methods/devices for transmitting and receiving multicast signaling according to embodiments may generate an NIF and an SIF as broadcast network signaling information.

The primary purpose of broadcast network signaling is to describe a broadcast network using a logical stream, physical channel parameters, and service locations across the stream. DVB-NIP defines two tables that describe the broadcast network.

Network Informaiton File (NIF): The NIF provides the logical and physical parameters of the declared streams and channels of the broadcast network.

Service Information File (SIF): The SIF provides information about the locations of a DVB-I service list, a service manifest file, interactive applications, and other metadata (e.g., DVB-I content guides) within the logical stream of the broadcast network.

Both NIF and SIF are always present in the bootstrap stream. Any stream broadcasting an NIF/SIF pair should also contain the related DVB-I service list entry point .xml file.

Referring to FIG. 6, the multicast signal transmission method according to the embodiments further includes compressing an IP header included in the IP stream at the link layer, generating a header compression descriptor including information related to the compression of the IP header, wherein the header compression descriptor and the LLC descriptor are encapsulated in the GSE-LLC packet.

Referring to FIG. 6, a multicast signal transmission device may include a receiver configured to receive Internet Protocol (IP) streams for multicast from a higher layer, a first encapsulator configured to encapsulate the IP streams into a Generic Stream Encapsulation (GSE) packet at a link layer, a second encapsulator configured to generate a Logical Link Control (LLC) descriptor of GSE and encapsulate the same into a GSE-LLC packet at the link layer, and a transmitter configured to transmit a GSE stream containing the GSE packet and the GSE-LLC packet to a physical layer.

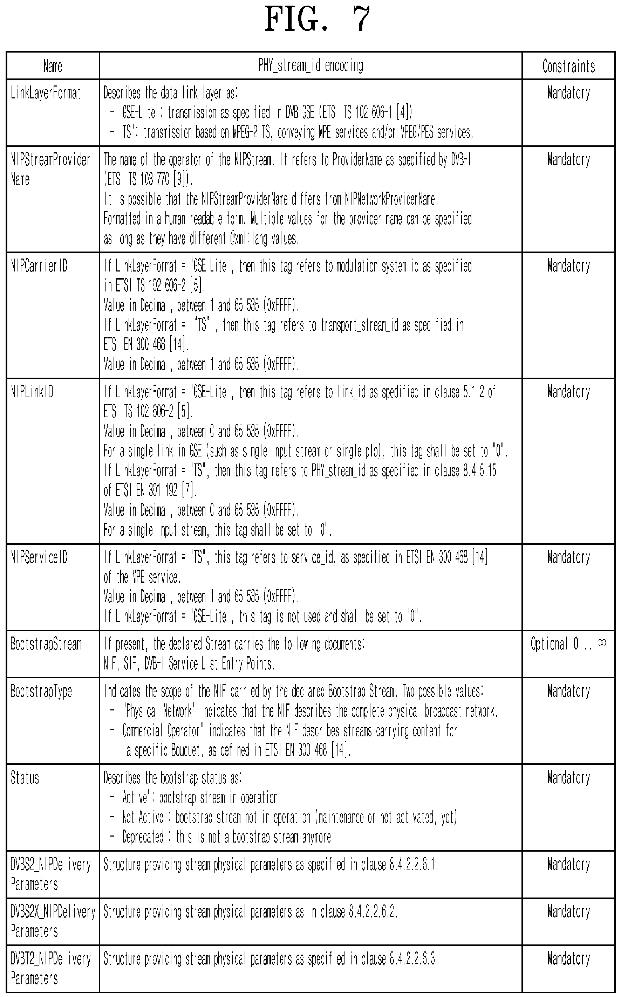

FIG. 7 illustrates a Network Information File (NIF) according to embodiments of the present disclosure.

The NIF according to the embodiments may include a NIP stream type field (NIPStreamType) as shown in FIG. 7. The NIP stream type field is defined as follows:
<complexType name="NIPStreamType">
<sequence>
<element name="LinkLayerFormat" type="mpeg7:TextualType" />
<simpleType>
<restriction base="mpeg7: Textual Type">
<enumeration value="GSE-Lite"/>
<enumeration value="TS"/>
</restriction>
</simpleType>
<element name="NIPStreamProviderName" type="dvbisd:ProviderName" />
<element name="NIPCarrierID" type= "positiveInteger" minvalue="0" maxvalue="65535"/>
<element name="NIPLinkID" type= "positiveInteger" minvalue="0" maxvalue="65535"/>
<element name="NIPServiceID" type="xs:unsignedShort" minvalue="0" maxvalue="65535"/>
<element name="BootstrapStream" minOccurs = "0"/>
<complexType>
<Sequence>
<element name="BootstrapType" type="mpeg7:TextualType"/>
<simpleType>
<restriction base="mpeg7: Textual Type">
<enumeration value="Physical Network"/>
<enumeration value="Commercial Operator"/>
</restriction>
</simpleType>
<element name="Status" type="mpeg7: Textual Type" />
<simpleType>
<restriction base="mpeg7: Textual Type">
<enumeration value="Active"/>
<enumeration value="Not Active"/>
<enumeration value="Deprecated"/>
</restriction>
</simpleType>
</Sequence>
</complexType>
<Choice>
<element name="DVBS2_NIPDeliveryParameters" type="DVBS2_NIPDeliveryParametersType"/>
<element name="DVBS2X_NIPDeliveryParameters" type="DVBS2X_NIPDeliveryParametersType"/>
<element name="DVBT2_NIPDeliveryParameters" type="DVBT2_NIPDeliveryParametersType"/>
</Choice>
</sequence>
</complexType>

LinkLayerFormat: Indicates the type of the data link layer. It includes include the following two types.

GSE-Lite: transmission as specified in DVB GSE (ETSI TS 102 606-1).

TS: transmission based on MPEG-2 TS for delivering MPE services and/or MPEG/PES services.

NIPStreamProviderName: The name of the operator of the NIP stream. It has the value of a provider name as described by DVB-I (ETSI TS 103 770). The NIPStreamProviderName may be different from the NIP network provider name. Multiple values for the provider name may be used as long as they have different @xml:lang values.

NIPCarrierID: When the link layer format is GSE-Lite, this field has the value of modulation_system_id in ETSI TS 102 606-2. This value may be in the range 1 to 65 535 (0xFFFF).

modulation_system_id: This 16-bit field indicates the system identifier used to identify the modulation parameters for the modulation system, within the interactive_network_id carrying data for a bootstrap session as defined in [29] . It shall be encoded as the modulation_system_id field of the IP/MAC_generic_stream_location_descriptor defined in ETSI EN 301 192.

modulation_system_id: This 16-bit field indicates the system identifier used to identify the modulation parameters for the modulation system, within the interactive_network_id carrying data for a bootstrap session. It shall be encoded as the modulation_system_id field of the IP/MAC_generic_stream_location_descriptor defined in ETSI EN 301 192.

When the link layer format is TS, this filed has the value of transport_stream_id in ETSI EN 300 468. This value may be in the range of 1 to 65 535 (0xFFFF).

transport_stream_id: A unique identifier of the TS in the original network.

NIPLinkID: When the link layer format is GSE-Lite, this field has the value of link_id in ETSI TS 102 606-2. For a single link in the GSE, such as a single input stream or a single PLP, this field is set to 0.

link_id: This 16-bit field uniquely identifies the physical link within the interactive network_id.

When the link layer format is TS, this field has the value of PHY_stream_id in ETSI EN 301 192. For a single input stream, this field is set to 0.

PHY_stream_id: This 16-bit field includes the stream identifier of the generic stream in the modulation system identified by modulation_system_id (this value is encoded as shown in FIG. 4).

NIPServiceID: When the link layer format is TS, this tag has the value of service_id, as specified in ETSI EN 300 468, of the MPE service.

service_id: A unique identifier of the service in the DVB transport stream.

When the link layer format is GSE-Lite, this field is not used and is set to 0.

BootstrapStream: A stream that carries NIF, SIF, and DVB-I service list entry points.

BootstrapType: Indicates the scope of the NIF carried by the bootstrap stream: Physical Network indicates that the NIF describes a complete physical broadcast network; Commercial Operator indicates that the NIF describes streams carrying content for a specific Bouquet, as defined in ETSI EN 300 468.

Status: Indicates the bootstrap status: Active indicates that the bootstrap stream is in operation; Not Active indicates that the bootstrap stream is not in operation.

DVBS2_NIPDeliveryParameters, DVBS2X_NIPDeliveryParameters, and DVBT2_NIPDeliveryParameters are stream physical parameters, respectively.

Referring to FIG. 7, the multicast signal transmission method according to the embodiments further includes generating a Network Information File (NIF). The NIT may contain information comprising physical parameters related to a Native IP (NIP) stream generated by processing the IP streams at the link layer by GSE-lite or Transport Stream/Multi-Protocol Encapsulation (TS/MPE). The information may include a link layer format, an NIP carrier ID, an NIP link ID, and an NIP service ID. The link layer format may include information indicating whether the link layer format for the NIP stream is the GSE-Lite or the TS. The NIP carrier ID may have a value of an identifier for identifying modulation parameters for the modulation system based on the link layer format being the GSE-Lite, or may have a value of a transport stream ID based on the link layer format being the TS. The NIP link ID may have a value of a link ID for identifying the physical layer based on the link layer format being the GSE-Lite, or may have a value of an identifier for a generic stream (GS) in a modulation system based on the link layer format being the TS, the NIP link ID. The NIP service ID may have an unused value based on the link layer format being the GSE-Lite, or may have a value of an identifier for identifying a service in a transport stream based on the link layer format being the TS.

The NIP stream is a Layer 2 packet stream composed of GSE-Lite packets or TS/MPE sessions.

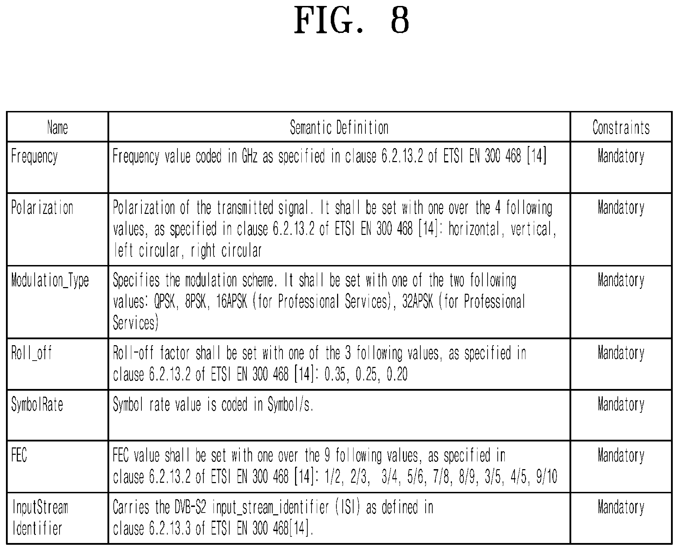

FIG. 8 illustrates an NIF according to embodiments of the present disclosure.

FIG. 8 shows a DVBS2_NIPDeliveryParametersType field for DVB S2 in the NIF.
<complexType name="DVBS2_NIPDeliveryParametersType">
<sequence>
<element name="Frequency" type="positiveinteger"/>
<element name="Polarization" type="string"/>
<simpleType>
<restriction base="xs:string">
<enumeration value="horizontal"/>
<enumeration value="vertical"/>
<enumeration value="left circular"/>
<enumeration value="right circular"/>
</restriction>
</simpleType>
<element name="Modulation_Type" type="string"/>
<simpleType>
<restriction base="xs:string">
<enumeration value="QPSK"/>
<enumeration value="8PSK"/>
<enumeration value=" 16APSK"/>
<enumeration value="32APSK"/>
</restriction>
</simpleType>
<element name="Roll_off" type="byte"/>
<simpleType>
<restriction base="xs:string">
<enumeration value="0.35"/>
<enumeration value="0.25"/>
<enumeration value="0.20"/>
</restriction>
</simpleType>
<element name="SymbolRate" type="short"/>
<element name="FEC" type="string"/>
<simpleType>
<restriction base="xs:string">
<enumeration value=" 1/2"/>
<enumeration value="2/3 "/>
<enumeration value="3/4"/>
<enumeration value="5/6"/>
<enumeration value="7/8"/>
<enumeration value="8/9"/>
<enumeration value="3/5"/>
<enumeration value="4/5"/>
<enumeration value="9/10"/>
</restriction>
</simpleType>
<element name="InputStreamIdentifier" type="integer" minvalue="0" maxvalue="255"/>
</sequence>
</complexType>

For example, when the physical layer is DVB S2, the NIF may carry the delivery parameters as shown in FIG. 8.

Frequency indicates the frequency value according to ETSI EN 300 468.

The NIP delivery parameters for DVB S2 may deliver a modulation scheme, an FEC coding rate value, ISI, etc.

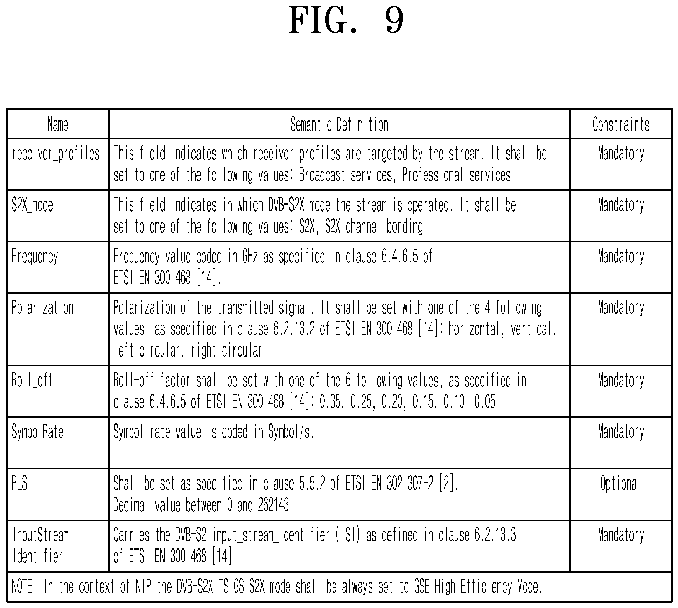

FIG. 9 illustrates an NIF according to embodiments of the present disclosure.

FIG. 9 shows the DVBS2X_NIP Delivery Parameters field included in the NIF.
complexType name="DVBS2X_NIPDeliveryParametersType">
<sequence>
<element name="receiver_profiles" type="string"/>
<simpleType>
<restriction base="xs:string">
<enumeration value="Broadcast services"/>
<enumeration value="Professional services"/>
</restriction>
</simpleType>
<element name=" S2X_mode" type="string"/>
<simpleType>
<restriction base="xs:string">
<enumeration value="S2X"/>
<enumeration value=" S2X channel bonding"/>
</restriction>
</simpleType>
<element name="Frequency" type="positiveinteger" />
<element name="Polarization" type="string"/>
<simpleType>
<restriction base="xs:string">
<enumeration value="horizontal"/>
<enumeration value="vertical"/>
<enumeration value="left circular"/>
<enumeration value="right circular"/>
</restriction>
</simpleType>
<element name="Roll_off" type="byte"/>
<simpleType>
<restriction base="xs:string">
<enumeration value="0.35"/>
<enumeration value="0.25"/>
<enumeration value="0.20"/>
<enumeration value="0.15"/>
<enumeration value="0.10"/>
<enumeration value="0.05"/>
</restriction>
</simpleType>
<element name=" SymbolRate" type="short"/>
<element name="PLS" type="integer" minOccurs="0" minvalue="0" maxvalue="262143 "/>
<element name="InputStreamIdentifier" type="integer" minvalue="0" maxvalue="255"/>
</sequence>
</complexType>

The DVB S2X NIP delivery parameters include the delivery parameters as shown in FIG. 9 when the NIP stream is transmitted to the DVB S2X physical layer.

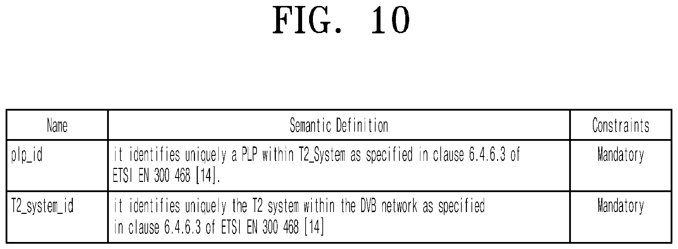

FIG. 10 illustrates an NIF according to embodiments of the present disclosure.

FIG. 10 shows DVB_T2NIPDeliveryParameters included in the NIF.
<complexType name="DVBT2_NIPDeliveryParametersType">
<sequence>
<element name="plp_id" type="xs:unsignedShort" minvalue="0" maxvalue="255"/>
<element name="T2_system_id" type="xs:unsignedShort" minvalue="1" maxvalue="65565"/>
<element name= "Iong_T2_system_delivery_descriptor" type="dvbnipsd:long_T2_system_delivery_descriptorType" minOccurs="0"/>
</sequence>
</complexType>

When transmitting a NIP stream to the DVB T2 physical layer, the delivery parameters as shown in FIG. 10 are delivered over the NIF.

A DVB-NIP broadcast platform delivers IP multicast data within the NIP stream. The NIP stream is a series of network layer IP packets transmitted through data link layer frames with no specific timing constraints. The data link layer of NIP may be a GSE-Lite stream or an MPE stream.

Accordingly, the NIP stream is identical to the GSE-Lite stream or MPE stream.

In a single input stream DVB-S2X implementation, a single GSE-Lite stream is delivered through a single physical transponder/channel. In a multi-stream implementation, one or more GSE-Lite streams may be delivered through a single physical transponder/channel. The same logic applies to single-PLP or multi-PLP DVB-T2 implementations.

In the context of DVB-S2, an NIP stream is delivered using an MPE stream declared as the only component of the DVB service. A transport stream may carry two or more DVB services, each delivering a single MPE stream.

The multicast data transmitted through the broadcast channel is primarily generated by the multicast server, but it may also be generated by the NIP signaling server associated with each NIP stream. Each NIP stream is associated with only one multicast server. The multicast server establishes a multicast transport session composed of one or more multicast streams.

When multiple logical multicast server functions need to be supported on a given physical channel, a multi-input stream/PLP mechanism is used as defined in the applicable physical layer standard.

NIP streams are uniquely identified by four parameters: NIPNetworkID, NIPCarrierID, NIPLinkID, and NIPServiceID. In particular, depending on how the value of the NIP Link ID is defined, the decoder/receiver may correctly receive, parse, and decode the NIP streams across the upper layer, data link layer, and physical layer.

To identify NIP streams according to GSE-lite, the parameters are defined as follows. For example, NIPNetworkID is defined as interactive_network_id (ETSI TS 102 606-2), NIPCarrierID is defined as T2_system_id (ETSI TS 102 606-2) or S2_system_id (ETSI TS 102 606-2), and NIPLinkID is defined as an Input Stream Identifier (ISI) according to DVB-S2X (ETSI EN 302 301-1) or PLP ID according to DVB-T2 (ETSI EN 302 301-2). In this case, the NIP stream is mapped to the parameters on the physical layer side.

NIP streams are identical to GSE-Lite streams. NIP stream identifiers may be GES stream identifiers. From the perspective of GSE-LLC, GSE streams and GSE-Lite streams are identical.

Accordingly, to address the aforementioned issues, it is necessary to redefine the NIPCarrierID and NIPLinkID from the existing definitions of the identifiers, as in the embodiments.

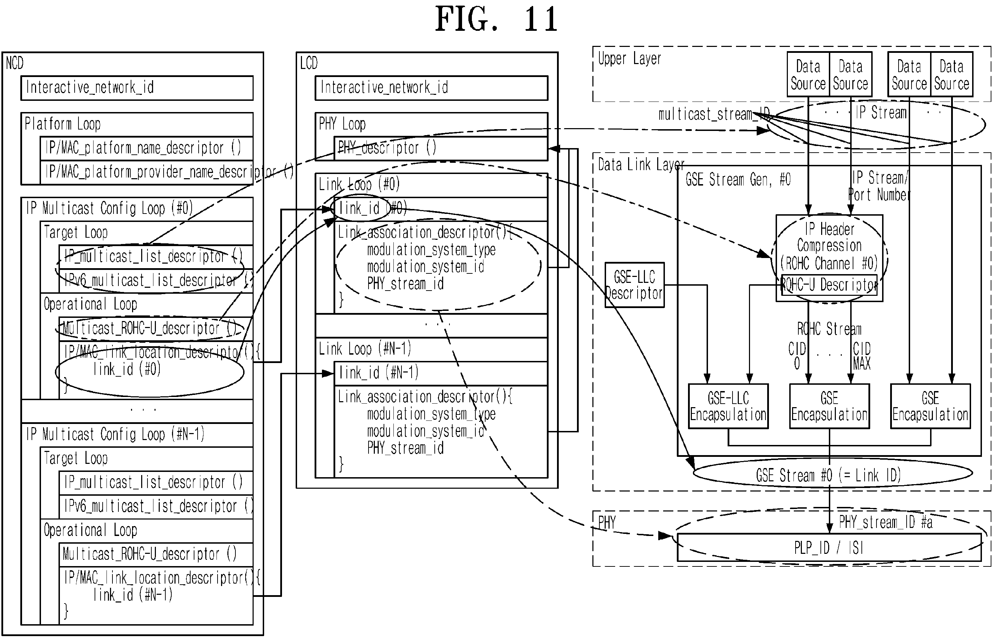

FIG. 11 illustrates Generic Stream Encapsulation - Logical Link Control (GSE-LLC) signaling in an NIP system according to embodiments of the present disclosure.

FIG. 11 illustrates a method of identifying a GSE stream in GSE-LLC signaling in an NIP system according to embodiments.

The GSE stream may be identified using a link_id. Multicast lists and ROHC-U descriptors are defined based on the link_id. The link_id is mapped to PHY_stream_id. However, the link_id and the PHY_stream_id are assigned different values. The PHY_stream_id is a 16-bit encoded version of the ISI and PLP ID. In the DVB-S2X system, the physical system ID is not a simple bit conversion of the ISI.

As shown in FIG. 11, in the multicast signal transmission method, the generating and transmitting multiple multicast streams may include processing the multicast streams at the data link layer, generating signaling information of the link layer, generating packets for the multicast streams and signaling information, and transmitting the streams including the packets according to an encoding method for the physical layer.

In this case, the NCD includes information about IP multicast corresponding to a multicast stream ID per IP multicast configuration loop. The IP multicast configuration loop includes a target loop and an operational loop. The target loop identifies an IP multicast stream by a multicast stream ID in the multicast list descriptor. The operational loop contains Multicast_ROHC-U_descriptor. The ROHC-U _descriptor contains information about the IP stream whose IP header is compressed at the link layer. The IP/MAC_link_location_descriptor in the operational loop has a link_id, which has the same value as the link_id in the LCD. The final generated GSE stream at the data link layer is identified by the link_id. The LCD includes a link_association_descriptor, which includes system_type, system_id, and stream_id related to the characteristics of the physical layer delivering the GSE stream identified by the link_id. The physical layer delivering the GSE stream is identified by the PLP ID or isi.

Referring to FIG. 11, the NCD includes a multicast list descriptor for the multicast. The IP streams for the multicast are identified by the multicast list descriptor, and the GSE stream is identified by the first link ID in the NCD and the third link ID in the LCD having the same value as the first link ID.

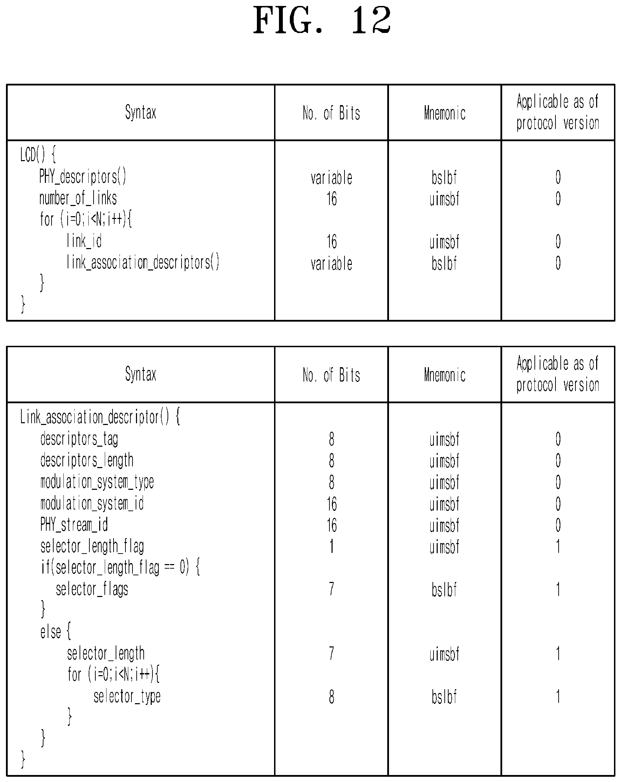

FIG. 12 illustrates LCD according to embodiments of the present disclosure.

The method for redefining parameters for identification of an NIP stream is described with reference to FIG. 12.

When encapsulating an IP multicast stream at the link layer according to the GSE-Lite type, parameters for identifying the resulting NIP stream are generated.

The NIPNetworkID is defined as the interactive_network_id according to ETSI TS 102 606-2. The NIPCarrierID is not defined as a T2_system_id or S2_system_id, but is redefined as a modulation_system_id according to ETSE TS 102 606-2. That is, the value of the ID is mapped to a different value than the existing value, such that the NIP stream may be correctly identified.

The NIPLinkID is redefined as a link_id according to ETSI TS 102 606-2, rather than the ISI or PLP ID.

The NIPServiceID is set to 0.

In other words, referring to the syntax of the LCD in FIG. 12, the NIPLinkID is assigned to the value of the link_id included in the LCD. The NIPCarrierID is assigned to the value of the modulation_system_id included in the link_association_descriptor of the LCD.

As a result, in the implementation of processing multicast at the link layer and receiving the same at the physical layer, errors in the NIP LINK ID with PLP ID may be resolved, and association/mapping of the link layer and physical layer for multicast may be provided.

Referring to FIG. 12, a value of the third link ID included in the LCD corresponds to the value of the NIP link ID, and an identifier for identifying modulation parameters for a modulation system included in the LCD corresponds to the value of the NIP carrier ID.

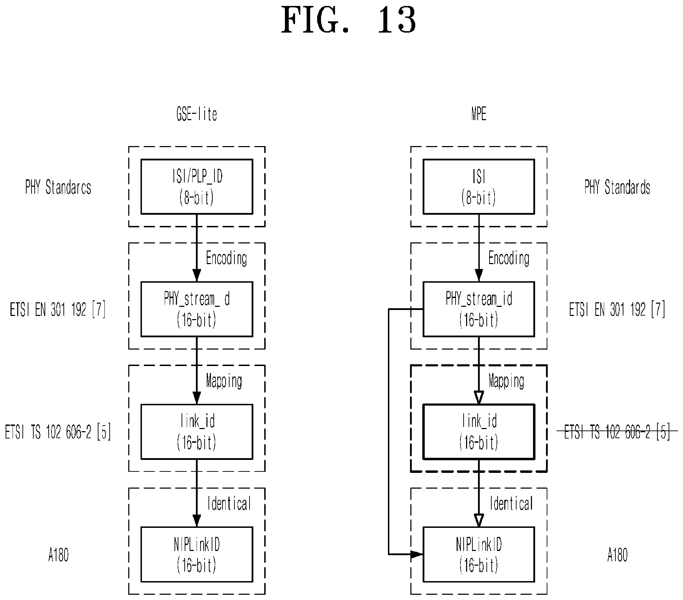

FIG. 13 illustrates a method of identifying an NIP stream according to embodiments of the present disclosure.

By newly defining the NIP stream identification parameters, as shown in FIG. 12, a mapping relationship between the parameters may be established, as shown in FIG. 13.

When the link layer format is GSE-lite, the physical layer identifies a physical layer identified by the ISI or PLP ID. In this case, the ISI or PLP ID has an 8-bit value. The receiver parses the LCD at the link layer and identifies the physical stream including a multicast stream transmitted to the link layer by the PHY stream ID included in the LCD. The PHY stream ID has a 16-bit value obtained by encoding 8 bits of ISI or PLP ID encoded, as shown in FIG. 4. Accordingly, an encoding process from 8 bits to 16 bits is required. The encoded 16-bit PHY stream ID is mapped to a link_id of the link layer. The 16-bit link_id is the same as the NIPLinkID of the NIP stream.

When the link layer format is MPE, the 8 bits of the ISI of the physical layer are encoded and converted to a 16-bit PHY stream ID. In the case of MPE, the link_id is not used, and thus the encoded 16-bit PHY stream ID is the same as the NIPLinkID of the NIP stream.

That is, as shown in FIG. 13, it may be seen how the ISI and PLP IDs are linked to the NIPLinkID according to the respective link layer formats.

With these linkage and identification parameters, GSE streams of multicast IP streams may be transmitted, received, and identified, as shown in FIG. 3.

Referring to FIG. 3, in GEE-Lite, when transmitting and receiving a multicast broadcast signal by a DVB-S2X transponder and/or DVB-T2 channel, the multicast signal may be identified at the physical layer by the ISI or PLP ID, the physical stream is identified by a PHY_stream_id, and the GSE stream at the data link layer included in the physical stream at the physical layer may be identified by a link_id that is the same as the NIP Link ID. The GSE LLC information, including the NCD and LCD, may indicate the association between the IP multicast, the GSE stream, and the physical stream.

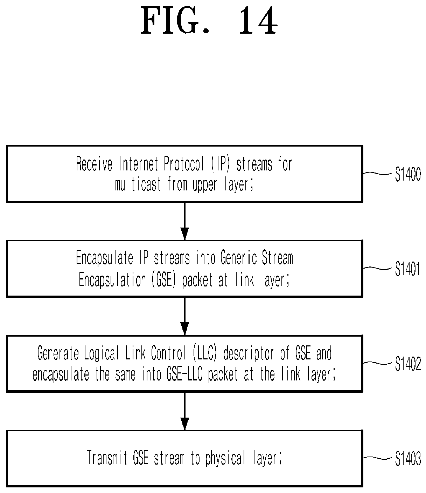

FIG. 14 illustrates a multicast signal transmission method according to embodiments of the present disclosure.

S1400: A multicast signal transmission method according to embodiments may include receiving Internet Protocol (IP) streams for multicast from an upper layer. For details of the operation of receiving multicast IP streams at the data link layer, refer to the description of FIGS. 3, 5, 6, and the like.

S1401: The multicast signal transmission method according to the embodiments may further include encapsulating the IP streams into a Generic Stream Encapsulation (GSE) packet at a link layer. For details of the GSE operation, refer to the description of FIGS. 3, 5, 6, and the like.

S1402: The multicast signal transmission method according to the embodiments may further include generating a Logical Link Control (LLC) descriptor of GSE and encapsulating the same into a GSE-LLC packet at the link layer. For details of the GSE signaling operation, refer to the description of FIGS. 1 to 5, 7 to10, 12, and the like.

S1403: The multicast signal transmission method according to the embodiments may further include transmitting a GSE stream to a physical layer. For details of the operation of transmitting the multicast signal from the data link layer to the physical layer, refer to the description of FIGS. 3, 5, 6, and the like. The multicast signal is processed according to the upper layer, link layer, and physical layer. For details of signaling methods associated with each layer, refer to the description of FIGS. 3, 5, 11, and the like.

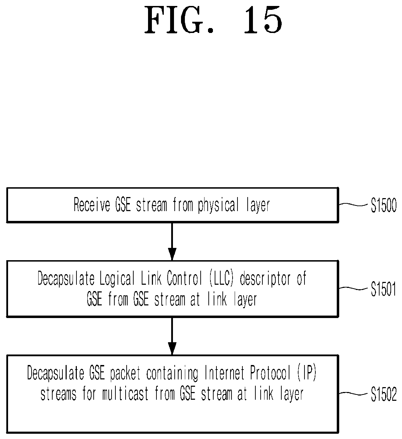

FIG. 15 illustrates a multicast signal reception method according to embodiments of the present disclosure.

S1500: The multicast signal reception method according to the embodiments may include receiving a GSE stream from a physical layer. For details of the reception operation according to the protocol stack, refer to the description of FIGS. 3, 5, 6, etc.

S1501: The multicast signal reception method according to the embodiments may further include decapsulating a Logical Link Control (LLC) descriptor of the GSE from the GSE stream at a link layer.

S 1502: The multicast signal reception method according to the embodiments may further include decapsulating a GSE packet containing Internet Protocol (IP) streams for multicast from the GSE stream at the link layer.

The decapsulation may follow the reverse process of the encapsulation at the transmitter side, and may efficiently parse the received signal and information to decode the multicast signal. For detais of the decapsulation operation, refer to the description of FIGS. 1 to 5, 7 to10, 12,, and the like.

The transmission and reception methods according to the embodiments in FIGS. 14, 15, and the like may have the following effects.

The TM-NIP system may transmit multiple multicast streams over a broadcast network, and apply the MABR standard for IP-based multicast transmission, thereby increasing inter-standard compatibility. It may provide a solution to apply MABR streams, which are mainly considered for transmission over an ISP network, to broadcast networks. A signaling structure for transmission of adaptive bitrate multicast media in the unidirectional delivery network and identification thereof may be provided. Signaling may be transmitted using streams with a fixed IP address and UDP port, and bootstrapping may be applied therethough. Multiple signaling files (tables) may be allowed to be transmitted through the same IP address and UDP port and a header for identifying the same may be provided.

Further, in a unidirectional delivery network such as a terrestrial broadcast network or satellite broadcast network, a multicast transport session may be mapped to a resource in the unidirectional delivery network to support adaptive bitrate multicast media transmission configured for application to existing ISP networks. When a unidirectional delivery network is applied to the interface between the multicast server and the multicast gateway, transparent transmission may be supported.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

As described above, related details have been described in the best mode for carrying out the embodiments.

### [Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

## Claims

1. A method of transmitting a multicast signal, the method comprising:
receiving Internet Protocol (IP) streams for multicast from an upper layer;
encapsulating the IP streams into a Generic Stream Encapsulation (GSE) packet at a link layer;
generating a Logical Link Control (LLC) descriptor of GSE and encapsulating the same into a GSE-LLC packet at the link layer; and
transmitting a GSE stream containing the GSE packet and the GSE-LLC packet to a physical layer.

2. The method of claim 1, wherein the LLC descriptor of the GSE comprises Network Control Data (NCD) and Link Control Data (LCD),
wherein the NCD comprises:
a first descriptor for a first IP stream for the multicast; and
a second descriptor for a second IP stream for the multicast,
wherein:
the first descriptor comprises a first link ID for the first IP stream for the multicast;
the second descriptor comprises a second link ID for the second IP stream for the multicast; and
the LCD comprises:
a third link ID having the same value as the first link ID;
a type of a modulation system for the first IP stream for the multicast;
an identifier for identifying modulation parameters for the modulation system; and
an identifier for a generic stream (GS) in the modulation system identified by the identifier,
wherein the LCD further comprises:
a fourth link ID having the same value as the second link ID;
a type of a modulation system for the second IP stream for the multicast;
an identifier for identifying modulation parameters for the modulation system; and
an identifier for a GS in the modulation system identified by the identifier.

3. The method of claim 1, further comprising:
compressing an IP header included in the IP stream at the link layer;
generating a header compression descriptor including information related to the compression of the IP header,
wherein the header compression descriptor and the LLC descriptor are encapsulated in the GSE-LLC packet.

4. The method of claim 1, further comprising:
generating a Network Information File (NIF),
wherein the NIF contains information comprising physical parameters related to a Native IP (NIP) stream generated by processing the IP streams at the link layer by GSE-lite or Transport Stream/Multi-Protocol Encapsulation (TS/MPE),
wherein the information comprises a link layer format, an NIP carrier ID, an NIP link ID, and an NIP service ID,
wherein the link layer format comprises information indicating whether the link layer format for the NIP stream is the GSE-Lite or the TS,
wherein:
based on the link layer format being the GSE-Lite, the NIP carrier ID has a value of an identifier for identifying modulation parameters for the modulation system; or
based on the link layer format being the TS, the NIP carrier ID has a value of a transport stream ID,
wherein:
based on the link layer format being the GSE-Lite, the NIP link ID has a value of a link ID for identifying the physical layer; or
based on the link layer format being the TS, the NIP link ID has a value of an identifier for a generic stream (GS) in a modulation system,
wherein:
based on the link layer format being the GSE-Lite, the NIP service ID has an unused value; or
based on the link layer format being the TS, the NIP service ID has a value of an identifier for identifying a service in a transport stream.

5. The method of claim 2, wherein the NCD comprises a multicast list descriptor for the multicast,
wherein:
the IP streams for the multicast are identified by the multicast list descriptor; and
the GSE stream is identified by the first link ID in the NCD and the third link ID in the LCD having the same value as the first link ID.

6. The method of claim 5, wherein:
a value of the third link ID comprised in the LCD corresponds to a value of the NIP link ID; and
an identifier for identifying modulation parameters for a modulation system comprised in the LCD corresponds to the value of the NIP carrier ID.

7. A device for transmitting a multicast signal, comprising:
a receiver configured to receive Internet Protocol (IP) streams for multicast from a higher layer;
a first encapsulator configured to encapsulate the IP streams into a Generic Stream Encapsulation (GSE) packet at a link layer;
a second encapsulator configured to generate a Logical Link Control (LLC) descriptor of GSE and encapsulate the same into a GSE-LLC packet at the link layer; and
a transmitter configured to transmit a GSE stream containing the GSE packet and the GSE-LLC packet to a physical layer.

8. The device of claim 7, further comprising:
a signaling generator configured to generate a Network Information File (NIF),
wherein the NIF contains information comprising physical parameters related to a Native IP (NIP) stream generated by processing the IP streams at the link layer by GSE-lite or Transport Stream/Multi-Protocol Encapsulation (TS/MPE),
wherein the information comprises a link layer format, an NIP carrier ID, an NIP link ID, and an NIP service ID,
wherein the link layer format comprises information indicating whether the link layer format for the NIP stream is the GSE-Lite or the TS,
wherein:
based on the link layer format being the GSE-Lite, the NIP carrier ID has a value of an identifier for identifying modulation parameters for the modulation system; or
based on the link layer format being the TS, the NIP carrier ID has a value of a transport stream ID,
wherein:
based on the link layer format being the GSE-Lite, the NIP link ID has a value of a link ID for identifying the physical layer; or
based on the link layer format being the TS, the NIP link ID has a value of an identifier for a generic stream (GS) in a modulation system,
wherein:
based on the link layer format being the GSE-Lite, the NIP service ID has an unused value; or
based on the link layer format being the TS, the NIP service ID has a value of an identifier for identifying a service in a transport stream.

9. A method of receiving a multicast signal, the method comprising:
receiving a Generic Stream Encapsulation (GSE) stream from a physical layer;
decapsulating a Logical Link Control (LLC) descriptor of GSE from the GSE stream at a link layer; and
decapsulating a GSE packet containing Internet Protocol (IP) streams for multicast from the GSE stream at the link layer.

10. The method of claim 9, wherein the LLC descriptor of the GSE comprises Network Control Data (NCD) and Link Control Data (LCD),
wherein the NCD comprises:
a first descriptor for a first IP stream for the multicast; and
a second descriptor for a second IP stream for the multicast,
wherein:
the first descriptor comprises a first link ID for the first IP stream for the multicast;
the second descriptor comprises a second link ID for the second IP stream for the multicast; and
the LCD comprises:
a third link ID having the same value as the first link ID;
a type of a modulation system for the first IP stream for the multicast;
an identifier for identifying modulation parameters for the modulation system; and
an identifier for a generic stream (GS) in the modulation system identified by the identifier,
wherein the LCD further comprises:
a fourth link ID having the same value as the second link ID;
a type of a modulation system for the second IP stream for the multicast;
an identifier for identifying modulation parameters for the modulation system; and
an identifier for a GS in the modulation system identified by the identifier.

11. The method of claim 9, further comprising:
receiving a Network Information File (NIF),
wherein the NIF contains information comprising physical parameters related to a Native IP (NIP) stream generated by processing the IP streams at the link layer by GSE-lite or Transport Stream/Multi-Protocol Encapsulation (TS/MPE),
wherein the information comprises a link layer format, an NIP carrier ID, an NIP link ID, and an NIP service ID,
wherein the link layer format comprises information indicating whether the link layer format for the NIP stream is the GSE-Lite or the TS,
wherein:
based on the link layer format being the GSE-Lite, the NIP carrier ID has a value of an identifier for identifying modulation parameters for the modulation system; or
based on the link layer format being the TS, the NIP carrier ID has a value of a transport stream ID,
wherein:
based on the link layer format being the GSE-Lite, the NIP link ID has a value of a link ID for identifying the physical layer; or
based on the link layer format being the TS, the NIP link ID has a value of an identifier for a generic stream (GS) in a modulation system,
wherein:
based on the link layer format being the GSE-Lite, the NIP service ID has an unused value; or
based on the link layer format being the TS, the NIP service ID has a value of an identifier for identifying a service in a transport stream.

12. The method of claim 10, wherein the NCD comprises a multicast list descriptor for the multicast,
wherein:
the IP streams for the multicast are identified by the multicast list descriptor; and
the GSE stream is identified by the first link ID in the NCD and the third link ID in the LCD having the same value as the first link ID.

13. The method of claim 12, wherein:
a value of the third link ID comprised in the LCD corresponds to a value of the NIP link ID; and
an identifier for identifying modulation parameters for a modulation system comprised in the LCD corresponds to the value of the NIP carrier ID.

14. A device for receiving a multicast signal, the method comprising:
a receiver configured to receive a Generic Stream Encapsulation (GSE) stream from a physical layer;
a first decapsulator configured to decapsulate a Logical Link Control (LLC) descriptor of GSE from the GSE stream at a link layer; and
a second decapsulator configured to decapsulate a GSE packet containing Internet Protocol (IP) streams for multicast from the GSE stream at the link layer.

15. The method of claim 14, wherein the LLC descriptor of the GSE comprises Network Control Data (NCD) and Link Control Data (LCD),
wherein the NCD comprises:
a first descriptor for a first IP stream for the multicast; and
a second descriptor for a second IP stream for the multicast,
wherein:
the first descriptor comprises a first link ID for the first IP stream for the multicast;
the second descriptor comprises a second link ID for the second IP stream for the multicast; and
the LCD comprises:
a third link ID having the same value as the first link ID;
a type of a modulation system for the first IP stream for the multicast;
an identifier for identifying modulation parameters for the modulation system; and
an identifier for a generic stream (GS) in the modulation system identified by the identifier,
wherein the LCD further comprises:
a fourth link ID having the same value as the second link ID;
a type of a modulation system for the second IP stream for the multicast;
an identifier for identifying modulation parameters for the modulation system; and
an identifier for a GS in the modulation system identified by the identifier.
